# EUROPEAN PATENT APPLICATION

(11) **EP 4 651 247 A1**
(43) Date of publication of application: **19.11.2025**
(21) Application number: 24176517.1
(22) Date of filing: 17.05.2024
(51) Int. Cl.: H01M 8/248, C25B 9/73

(54) **COMPRESSION HARDWARE FOR COMPRESSING SEVERAL ELECTROCHEMICAL UNIT CELLS OF A FUEL CELL AND/OR ELECTROLYSER STACK FOR LIGHTWEIGHT APPLICATIONS**

(71) Applicant: AVL List GmbH, 8020 Graz (AT); AVL Fuel Cell Canada Inc, Burnaby, British Columbia V5A 4W2 (CA)
(72) Inventor: Mann, Bhagwant Tejpaul, Burnaby, 5980 (CA)
(74) Representative: Gamper, Bettina

(57) **Abstract**

The invention is related to a compression hardware (10) for compressing several electrochemical unit cells (110) of a fuel cell and/or electrolyser stack (100), wherein the compression hardware (10) comprises two end elements (14, 16) for exerting pressure on the several electrochemical unit cells (110) of the fuel cell and/or electrolyser stack (100), wherein the two end elements (14, 16) are arrangeable on two opposite sides of the several electrochemical unit cells (110), and at least one flexible element (18) for mechanically connecting the two end elements (14, 16), wherein the at least one flexible element (18) is configured to exert a compressive force on the two end elements (14, 16) for compressing the several electrochemical unit cells (110) of the fuel cell and/or electrolyser stack (100).

## Description

The present invention is related to compression hardware for compressing several electrochemical unit cells of a fuel cell and/or electrolyser stacks well as a fuel cell and/or electrolyser stack comprising such a compression hardware.

Proton exchange membrane (PEM) fuel cell and/or electrolyser stacks designed for lightweight applications are typically assembled, compressed, and held together with rods, bolts, or straps. These components are not ideal for use in lightweight applications because they typically have significant mass and can be relatively costly. It is difficult to scale down these components from use in large, high-power stacks to reduced-power, lightweight designs. Conventional materials for rods and bolts are notably denser compared to other fuel cell and/or electrolyser stack components. As an example, the typical density of thermoplastics used for end plates is about 1 g/cm³ while density for steel bolts is about 8 g/cm³. When scaling down from high-power fuel cell and/or electrolyser stacks to reduced-power, lightweight fuel cell and/or electrolyser stacks, the density of the bolts and straps do not scale down with the same proportion.

Lifetime considerations dictate whether compression springs are required or not. Fuel cell and/or electrolyser stacks designed for short lifetime applications seldom use springs. If longer lifetime is desired, designs with rods need several individual springs to compensate for the material compression set of seals and gas diffusion layers (GDLs). It is difficult to modify a fuel cell and/or electrolyser stack assembled with rods if desired lifetime changes; rods must be lengthened to include springs or shortened to eliminate excess material if springs are removed.

It is an objective of the present invention to overcome the disadvantages described above, at least partly. In particular, it is an objective of the present invention to provide compression hardware of a fuel cell and/or electrolyser stack for cost- and weight-sensitive applications.

Aforesaid problem is solved by compression hardware with the features of claim 1, as well as a fuel cell and/or electrolyser stack with the features of claim 15. Further features and details of the invention result from the subclaims, the description, and the drawings. Features and details described in connection with the compression hardware according to the invention naturally also apply in connection with the fuel cell and/or electrolyser stack according to the invention, and vice versa, so that reference is or can always be made mutually with regard to the disclosure concerning the individual aspects of the invention.

According to the present invention, compression hardware for compressing several electrochemical unit cells of a fuel cell and/or electrolyser stack is described. The compression hardware comprises two end elements for exerting pressure on the several electrochemical unit cells of the fuel cell and/or electrolyser stack, and at least one flexible element for mechanically connecting the two end elements. The two end elements are arrangeable on two opposite sides of the several electrochemical unit cells and the at least one flexible element is configured to exert a compressive force on the two end elements for compressing the several electrochemical unit cells of the fuel cell and/or electrolyser stack.

With the at least one flexible element, variations in the fuel cell and/or electrolyser stack length can be simply compensated.

Using the principle of mechanical advantage, the at least one flexible element can apply more compressive force than that of an equivalent rod under the same tensile stress, making it a lightweight alternative to conventional rods or straps. Furthermore, the compression hardware seamlessly works with systems with and without springs. In this context, "springs" mean individual springs and components that behave like springs, for example, gas diffusion layers (GDLs). In contrast to a rod, for example, the at least one flexible element can seamlessly accommodate changes to the fuel cell and/or electrolyser stack if spring requirements change post-assembly. Moreover, the at least one flexible element can easily accommodate changes to the stack length if the electrochemical unit cell count needs to be increased or decreased for power optimization.

The compression hardware can be used for lightweight applications, such as unmanned aerial vehicles (UAVs), submersibles, air cooled fuel cell stacks, portable electrolysers, etc.

The compression hardware in the present invention offers mass-optimized alternatives to the existing rods, bolts, or straps of the state of the art. The compression hardware is designed to provide the desired compression and stiffness to the fuel cell and/or electrolyser stack while reducing mass and improving the gravimetric power density of the fuel cell and/or electrolyser stack. The at least one flexible element compensates for fuel cell and/or electrolyser stack length changes during assembly due to part-to-part variations. It also allows greater dimensional stability than can be achieved by a conventional strap or rod. Various arrangements of one or more flexible elements can be used.

A flexible element is an element which can apply a compressive force on the two end elements. Because of the flexible element there can be a force on the two end elements in a direction towards each other.

The several electrochemical unit cells are stacked against one another. The phrase "stacked against one another" means that two or more electrochemical unit cells are physically arranged in series wherein their largest faces by surface area are in contact with one another. The end elements can be arranged on opposite sides at the respective ends of the several electrochemical unit cells. The several electrochemical unit cells can comprise fuel cells or electrolysers based on Proton Exchange Membrane (PEM) technology, Solid Oxide Cell (SOC) technology, or other competing technologies.

According to an aspect of the compression hardware, the at least one flexible element comprises a cable or a rope. Advantageously, the cable or the rope is flexible to hold the several electrochemical unit cells of the fuel cell and/or electrolyser stack under the required compression. Preferably, the cable can be stranded.

According to a further aspect of the compression hardware, the at least one flexible element may comprise a metal. The at least one flexible element can be metallic and as an example, may comprise stainless steel.

According to a further aspect of the compression hardware, the at least one flexible element may comprise a non-metallic material, such as Kevlar^{®} or carbon fibre.

According to a further aspect of the compression hardware, the at least one flexible element comprises a surface coating with an electrically insulating material.

According to a further aspect of the compression hardware, the at least one flexible element may comprise a surface coating to promote lubricity over the bearing surfaces of hooks.

According to a further aspect of the compression hardware, the two end elements may comprise a surface coating with an electrically insulating material.

According to a further aspect of the compression hardware, each of the two end elements comprises an electrically insulative layer or an electrically insulative surface coating, or both, for electrical isolation. An electrically insulative layer or an electrically insulative surface coating, or both, can be arranged on the side of the end element facing the several electrochemical unit cells. This electrically insulative layer can be an anode isolation sheet, a cathode isolation sheet, and/or an equivalent by means of injection molding.

According to a further aspect of the compression hardware, one of the two end elements is a top end element and the other of the two end elements is a bottom end element, wherein the top end element comprises a top end plate and the bottom end element comprises a bottom end plate.

The top end plate can comprise an anode isolator plate and/or an anode load plate. Further, the bottom end plate can comprise a media supply plate and/or a cathode load plate.

According to a further aspect of the compression hardware, the top end plate and/or the bottom end plate may comprise a solid or lattice structure. The top end plate and/or the bottom end plate may comprise metals such as aluminium, titanium, carbon steel, etc.

According to a further aspect of the compression hardware, the top end plate and/or the bottom end plate may comprise a non-metallic material, such as injection molded thermoplastic with or without reinforcing fillers.

In one instance of the compression hardware, the top end element comprises at least one spring cap and at least one spring pack, wherein the at least one spring pack is arranged between the top end plate and the at least one spring cap. In another instance where at least one spring pack is not required, features of the at least one spring cap may be integrated into the top end element or the at least one spring cap may be used without the spring pack.

Advantageously, the at least one spring pack can additionally contribute to the preload. This can compensate for compression losses of the several electrochemical unit cells between the top end element and the bottom end element over the lifetime of the fuel cell and/or electrolyser stack.

In one instance, the spring pack can comprise stacked Belleville disc springs. In another instance, the spring pack can comprise coil springs. In yet another instance, the spring pack can comprise a torsion bar. In yet another instance, the spring pack can comprise one or more leaf springs.

According to a further aspect of the spring cap, the spring cap can comprise at least one arm which extends out radially wherein the end of each arm comprises a hook with a bearing surface. The hooks can be connected with one or more flexible elements. Where a spring cap comprises multiple arms, the arms preferably form a cross-shaped pattern.

According to a further aspect of the compression hardware, the top end element comprises at least one spring cap, wherein the at least one spring cap is directly connected to the top end plate.

According to a further aspect of the compression hardware, the at least one flexible element is connected to the top end element by a hook of the at least one spring cap and/or a hook feature of the top end element. The at least one flexible element can form a loop, wherein the loop is guided over the bearing surface of the hook of the at least one spring cap and/or the hook feature of the top end element to form a connection between the at least one flexible element, the top end element, and the bottom end element.

The top end element can comprise one or more spring packs, spring caps, and/or hook features. Each spring cap can be connected to the top end plate via a spring pack.

According to a further aspect of the compression hardware, the top end plate and bottom end plate comprise passages for the at least one flexible element to pass through. The at least one flexible element comprises terminal ends, wherein each of the terminal ends is retained by an element of the top end plate or bottom end plate.

In one instance of the compression hardware, the at least one flexible element is weaved between the top end element and the bottom end element to allow the two end elements to be cinched towards one another. In another instance of the compression hardware, multiple flexible elements directly connect the top end element and the bottom end element without weaving.

The term "connected" means that there is mechanical contact between the at least one flexible element and the top end element, and that there is mechanical contact between the at least one flexible element and the bottom end element. Therefore, the term "connected" can mean that there is a fixed connection and/or that there is a looped connection. A looped connection can be realized by the at least one flexible element being guided over the bearing surface of a hook. Both the top end element and the bottom end element can comprise one or more hooks.

Further, according to the present invention, a fuel cell and/or electrolyser stack for generating power or generating fuel is described. The fuel cell and/or electrolyser stack comprises compression hardware according to the invention as described above and below, and several electrochemical unit cells. The several electrochemical unit cells are compressed by the compression hardware; this means that the compression hardware exerts a compressive force from opposite ends of the several electrochemical unit cells along the stacking direction (SD). Since the fuel cell and/or electrolyser stack comprises the compression hardware, the fuel cell and/or electrolyser stack has the same advantages as described before with the compression hardware.

Further advantages, features, and details of the invention should be apparent from the following description, in which embodiments of the invention are described in detail with reference to the drawings. Those drawings show:
- Figure 1: a perspective view of a fuel cell and/or electrolyser stack,
- Figure 2: a perspective view of the fuel cell and/or electrolyser stack from Fig. 1 from another perspective,
- Figure 3: a side view of one embodiment of the compression hard-ware,
- Figure 4: a perspective view of the compression hardware of Fig. 3 from the bottom side, and
- Figure 5: a perspective view of the compression hardware of Fig. 3 from the top side.

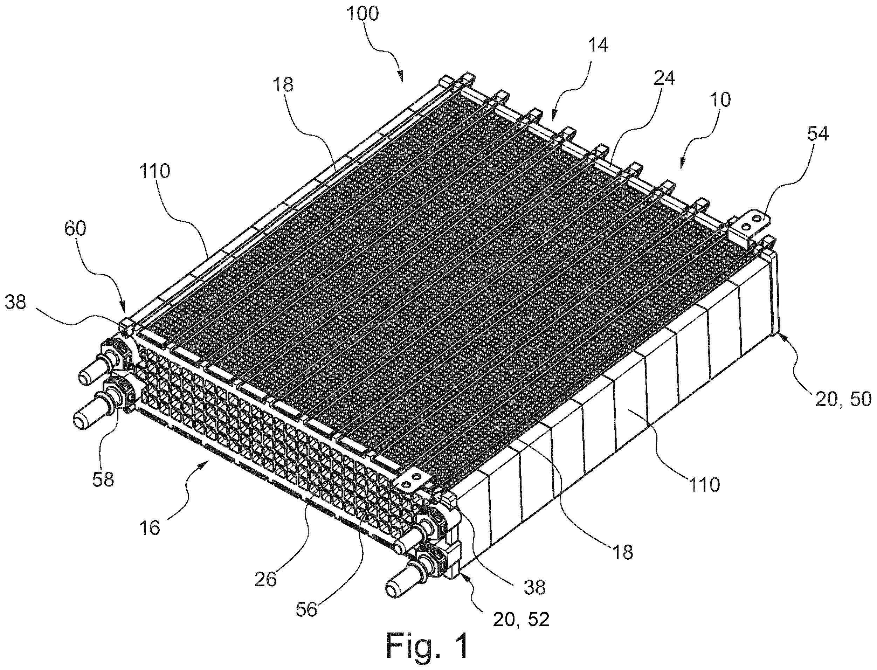

Fig. 1 shows a perspective view of a fuel cell and/or electrolyser stack 100. The fuel cell and/or electrolyser stack comprises compression hardware 10 and several electrochemical unit cells 110 which are stacked against one another. The several electrochemical unit cells 110 are compressed by the compression hardware 10. The fuel cell and/or electrolyser stack 100 can be used for generating power. In this case, the several electrochemical unit cells 110 comprise fuel cells. Alternatively, the fuel cell and/or electrolyser stack 100 can be used for generating fuel. In this case, the several electrochemical unit cells 110 comprise electrolyser cells.

The compression hardware 10 comprises two end elements 14, 16 for exerting pressure on the several electrochemical unit cells 110 of the fuel cell and/or electrolyser stack 100 and at least one flexible element 18 for mechanically connecting the two end elements 14, 16. In Fig. 1, there is one flexible element 18 on the side which can be seen. There can be another flexible element 18 on the other side which can be partially seen in Fig. 1.

The two end elements 14, 16 are arranged on two opposite sides of the several electrochemical unit cells 110. The flexible elements 18 on both sides of the fuel cell and/or electrolyser stack are configured to exert a compressive force on the two end elements 14, 16 to compress the several electrochemical unit cells 110.

The weight of the compression hardware 10 can be very low. Therefore, the compression hardware 10 is suitable for lightweight applications, such as aerial vehicles (manned or unmanned), submersibles, fuel cell stacks (liquid- or air-cooled, for example), electrolysers (portable, stationary, or in-vehicle), etc. Furthermore, the flexible element 18 can easily accommodate changes in the length of the several electrochemical unit cells 110 if the electrochemical unit cell count needs to be increased or decreased for power optimization.

The two end elements 14, 16 can comprise a surface coating with an electrically insulating material. More specifically, the top end plate 24 and the bottom end plate 26 can have such a coating. Furthermore, the two end elements 14, 16 can comprise an electrically insulative layer 20 for electrical isolation. Such an electrically insulative layer 20 can be arranged on the side of the end elements 14, 16 facing the several electrochemical unit cells 110. The electrically insulative layer 20 can be an anode isolation sheet 50 or a cathode isolation sheet 52.

The compression hardware 10 comprises a top end element 14 and a bottom end element 16. The top end element 14 comprises a top end plate 24 and the bottom end element 16 comprises a bottom end plate 26. The top end plate 24 can comprise an anode isolator plate and/or an anode load plate. Further, the bottom end plate 26 can comprise a media supply plate and/or a cathode load plate.

The top end plate 24 and/or the bottom end plate 26 can comprise solid or lattice structures. In one instance, the top end plate 24 and/or bottom end plate 26 can comprise metals, such as aluminium, titanium, carbon steel, etc. In another instance, the top end plate 24 and/or bottom end plate 26 can comprise non-metallic materials, such as injection molded thermoplastic with or without reinforcing fillers.

The fuel cell and/or electrolyser stack 100 can further comprise an anode bus plate 54, a cathode bus plate 56, one or more quick-connect fittings 58, and one or more port seals 60.

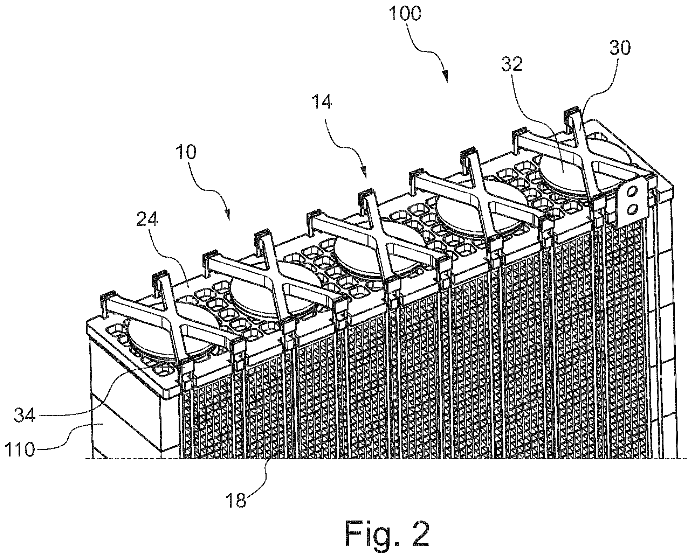

Fig. 2 shows another perspective view of the fuel cell and/or electrolyser stack 100. Only a part of the fuel cell and/or electrolyser stack 100 can be seen in Fig. 2. As can be seen, the top end element 14 of the compression hardware 10 comprises multiple spring caps 30 and multiple spring packs 32. The spring packs 32 are arranged between the top end plate 24 and the spring caps 30; however, as stated previously in this document, use of spring packs 32 is application-dependent and may not be necessary in other instances of this invention.

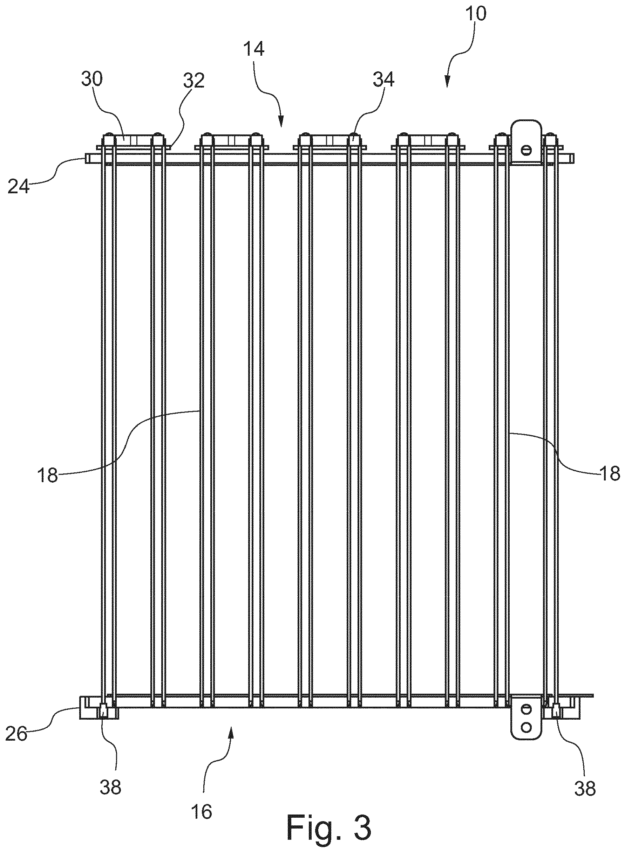

Fig. 3 shows a side view of the compression hardware 10. The compression hardware 10 comprises two end elements 14, 16 and a flexible element 18 on each side. In Fig. 3 only one flexible element 18 of one side is shown. The compression hardware 10 can also comprise more than one flexible element 18 on each side.

Each flexible element 18 can comprise a cable or a rope, comprised of one or more strands. The one or more strands of flexible element 18 can comprise metals, non-metallic materials such as Kevlar^{®} or carbon fibre, or a combination of both metal and non-metal materials. It is also possible that each flexible element 18 has a surface coating comprised of an electrically insulating material.

The flexible element 18 shown in Fig. 3 is weaved between the top end element 14 and the bottom end element 16 to allow the top end element 14 and the bottom end element 16 to be cinched towards one another. It can be seen in Fig. 3 that the flexible element 18 is connected to the top end element 14 and to the bottom end element 16 at least once.

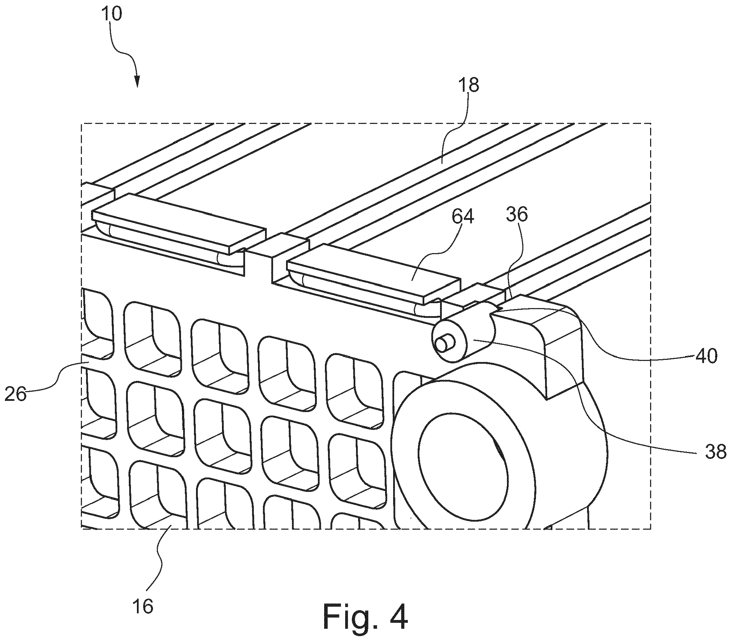

Fig. 4 shows a perspective view of the compression hardware 10 from the bottom side. Only a part of the compression hardware 10 is shown. The flexible element 18 comprises a terminal end 38. The terminal end 38 is retained in a hole 40 of the bottom end plate 26. Since the diameter of the terminal end 38 is larger than a diameter of the bore hole 36, the terminal end 38 is retained in the bottom end plate 26.

Furthermore, the bottom end plate 26 also comprises hooks with bearing surfaces 64. The flexible element 18 can be guided over these hooks 64.

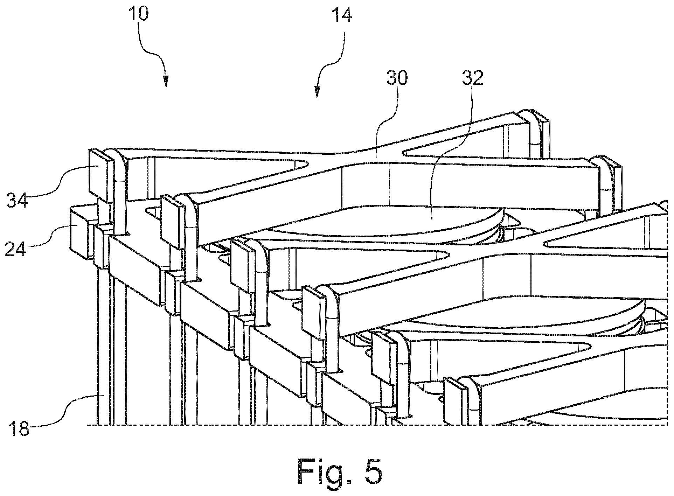

Fig. 5 shows a perspective view of the compression hardware 10 from the top side. The top end element 14 and the flexible element 18 of the compression hardware 10 are shown. The spring caps 30 comprise several arms. Each arm comprises a hook with a bearing surface 34. The flexible element 18 is connected to the spring caps 30 by the hooks 34. The flexible element 18 forms several loops which are guided over the hooks 34 in this instance.

The above description of the drawings describes the present invention by way of example only.

### Reference signs

- 10: compression hardware
- 14: top end element
- 16: bottom end element
- 18: flexible element
- 20: electrically insulative layer
- 24: top end plate
- 26: bottom end plate
- 30: spring cap
- 32: spring pack
- 34: hook with a bearing surface of top end element
- 36: bore hole
- 38: terminal end
- 40: hole
- 50: anode isolation sheet
- 52: cathode isolation sheet
- 54: anode bus plate
- 56: cathode bus plate
- 58: quick-connect fitting
- 60: port seal
- 64: hook with a bearing surface of bottom end element

- 100: fuel cell and/or electrolyser stack
- 110: electrochemical unit cell

## Claims

1. Compression hardware (10) for compressing several electrochemical unit cells (110) of a fuel cell and/or electrolyser stack (100), **characterized by**
two end elements (14, 16) for exerting pressure on the several electrochemical unit cells (110) of the fuel cell and/or electrolyser stack (100), wherein the two end elements (14, 16) are arrangeable on two opposite sides of the several electrochemical unit cells (110), and
at least one flexible element (18) for mechanically connecting the two end elements (14, 16), wherein the at least one flexible element (18) is configured to exert a compressive force on the two end elements (14, 16) for compressing the several electrochemical unit cells (110) of the fuel cell and/or electrolyser stack (100).

2. Compression hardware (10) according to claim 1, **characterized in that** the at least one flexible element (18) comprises a cable or a rope.

3. Compression hardware (10) according to claims 1 or 2, **characterized in that** the at least one flexible element (18) comprises a metal and/or a non-metallic material.

4. Compression hardware (10) according to any of the preceding claims, **characterized in that** the at least one flexible element (18) comprises a surface coating with an electrically insulating material.

5. Compression hardware (10) according to any of the preceding claims, **characterized in that** the two end elements (14, 16) comprise a surface coating with an electrically insulating material.

6. Compression hardware (10) according to any of the preceding claims, **characterized in that** each of the two end elements (14, 16) comprises an electrically insulative layer (20).

7. Compression hardware (10) according to any of the preceding claims, **characterized in that** the top end element (14) comprises a top end plate (24) and the bottom end element (16) comprises a bottom end plate (26).

8. Compression hardware (10) according to claim 7, **characterized in that** the top end plate (24) and/or the bottom end plate (26) comprise solid and/or lattice structures.

9. Compression hardware (10) according to claims 7 or 8, **characterized in that** the top end plate (24) and/or the bottom end plate (26) comprise one or more metals and/or one or more non-metallic materials.

10. Compression hardware (10) according to any of the claims 7 to 9, **characterized in that** the top end element (14) comprises at least one spring cap (30) and at least one spring pack (32), wherein the at least one spring pack (32) is arranged between the top end plate (24) and the at least one spring cap (30).

11. Compression hardware (10) according to any of the claims 7 to 9, **characterized in that** the top end element (14) comprises at least one spring cap (30), wherein the at least one spring cap (30) is directly connected to the top end plate (24).

12. Compression hardware (10) according to claims 10 or 11, **characterized in that** the at least one flexible element (18) is connected to the top end element (14) by at least one hook (34) on either side of the fuel cell and/or electrolyser stack (100) of the at least one spring cap (30).

13. Compression hardware (10) according to any of claims 7 to 12, **characterized in that** the at least one flexible element (18) comprises a terminal end (38), wherein each of the terminal ends (38) is fixed in a respective hole (40) of the top end plate (24) and/or bottom end plate (26).

14. Compression hardware (10) according to any of claims 7 to 13, **characterized in that** the at least one flexible element (18) is weaved between the top end element (14) and the bottom end element (16).

15. Fuel cell and/or electrolyser stack (100) for generating power or generating fuel, **characterized by**
a compression hardware (10) according to any of claims 1 to 14, and
several electrochemical unit cells (110) which are stacked against one another,
wherein the several electrochemical unit cells (110) are compressed by the compression hardware (10).
